(19)

Europäisches
Patentamt

European
Patent Office

Office européen
des brevets

(11)  EP 2 575 267 B1

(12)  **EUROPEAN PATENT SPECIFICATION**

(45) Date of publication and mention
of the grant of the patent:
**04.03.2015  Bulletin 2015/10**

(51) Int Cl.:
***H04B 7/06*** *(2006.01)*       ***H04B 7/08*** *(2006.01)*
*H04W 52/22* *(2009.01)*       *H04W 52/24* *(2009.01)*
*H04W 52/36* *(2009.01)*

(21) Application number: **11290454.5**

(22) Date of filing: **30.09.2011**

(54) **A base station for wireless telecommunications and a method for selecting which subset of antennas to use**

Basisstation für drahtlose Telekommunikation und Verfahren zur Auswahl der zu verwendenden Antennenuntergruppe

Station de base pour télécommunications sans fil et procédé pour sélectionner quel sous-ensemble d'antennes utiliser

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2013  Bulletin 2013/14**

(73) Proprietor: **ALCATEL LUCENT**
**92100 Boulogne-Billancourt (FR)**

(72) Inventor: **Kuzminskiy, Alexandr**
**Peatmoor**
**Swindon SN5 5BG**
**GB - UNITED KINGDOM (GB)**

(74) Representative: **Sarup, David Alexander et al**
**Alcatel-Lucent Telecom Ltd**
**Intellectual Property Business Group**
**Christchurch Way**
**Greenwich**
**London SE10 0AG (GB)**

(56) References cited:
**EP-A1- 2 161 851       WO-A1-2006/006826
JP-A- 2010 199 870     KR-A- 20080 039 711
US-A1- 2007 178 839**

**Description**

**Field of the invention**

The present invention relates to telecommunications, in particular to wireless telecommunications.

**Description of_the Related Art**

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocell generically for a cell that is smaller than a macrocell. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres. Femtocell base stations are sometimes referred to as femtos.

Femtocell base stations may have auto-configuring properties so as to support plug-and play deployment by users, for example in which fcmto base stations may integrate themselves into an existing macrocell network so as to connect to the core network of the macrocell network.

Femtocell base stations are often intended primarily for users belonging to a particular home or office. Femtocell base stations may be closed access or open access. In femtocell base stations that are closed access, access is restricted only to registered users, for example family members or particular groups of employees. In femtocell base stations that are open access, other users may also use the femtocell base station, usually subject to certain restrictions to protect the Quality of Service received by registered users.

Femtocell base stations often make use of the same radio frequencies as macrocells within which they are located, hence radio interference may occur. This interference is known as co-channel interference.

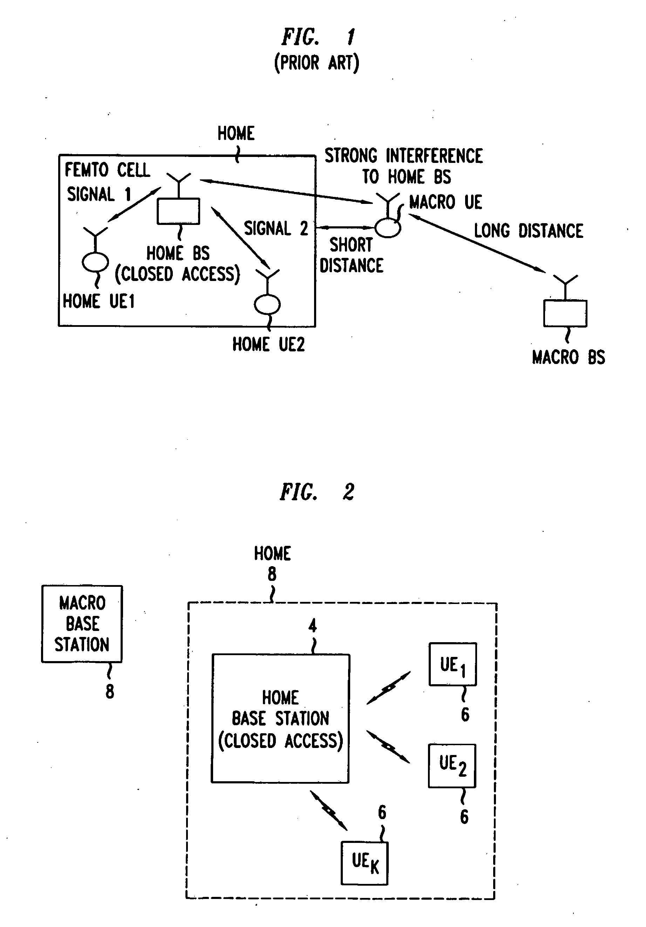

As shown in Figure 1, a known technical problem is that a femtocell base station in closed access mode may suffer strong co-channel interference, due to the macrocell, on uplink paths from the femto's user terminals to the femto. This occurs in particular when a user terminal that is connected to the macrocell base station is located close to the femtocell. Signals to that user terminal cause strong interference to reception at the femtocell base station of signals from user terminals (each denoted a "home UE" in Figure 1) that are connected to the femtocell base station. A consequence of this interference is that the user terminals connected to the femtocell base station use high transmit powers, leading to poor energy efficiency.

One known approach to noise suppression is multiple antenna interference suppression, see for example R. A. Monzingo and T. W. Miller, Introduction to Adaptive Arrays. New York: Wiley, 1980. This approach has been considered for indoor scenarios, see for example A. M. Kuzminskiy, H. R Karimi, "Multiple-antenna interference cancellation for WLAN with MAC interference avoidance in open access networks", EURASIP Journal on Wireless Communications and Networking (JWCN), ID 51358, 2007. However, the complexity of multiple antenna radio frequency (RF) chains and the corresponding signal processing, involving for example online matrix inversion, prevents its practical implementation in femtocell base stations.

The basic use of simple multi-element switchable antennas in a femtocell base station has been considered for downlink coverage and interference avoidance, see H. Claussen, F. Pivit, "Femtocell coverage optimization using switched multielement antenna," in Proc ICC, pp.1-6, 2009, and see Y. Jeong, H. Kim, B-S. Kim, H. Choo, "Avoiding of co-channel interference using switched parasitic array antenna in Fcmtocell networks," in Proc. ICCSA, part III, pp. 158-167, 2010.

Interference suppression when using switchable antennas in an indoor scenario has been studied, see P. Ngamjanyapom, M. Krairiksh, M. Bialkowski, "Combating interference in an indoor wireless-communication system using a phased-array antenna with switched-beam elements", Microwave and Optical Technology Letters, vol. 45, no. 5, pp. 411-415, June 2005. This involves measurements in a static indoor scenario for different locations of signal sources and interference sources. However, as explained in IEEE P802.11 Wireless LANs, TGn Channel Models, IEEE 802.11-03/940r4, May 2004, it is considered that direct applications of selected antennas or antenna combinations based on static measurements is not useful. This is because propagation channels are continuously changing in their quality, in realistic indoor scenarios.

Some technical background is provided by the following five documents:

United States Patent Publication US 2007/0178839 A1 describes in part, a technique for dynamic assignment of multiple antennas to different radio subsystems in a wireless device. The technique may include using an adaptive algorithm to allocate antennas to different radio subsystems as a function of, for example, application requirements, power requirements, and/or channel/network conditions. This also describes, in part, a technique for adaptively optimizing the use of the assigned antennas and other transmission parameters for each radio subsystem.

Korean Patent Publication KR 2008 0039711 A describes an apparatus and a method for reducing interference signals in a MIMO(Multi Input Multi Output) system are provided to obtain the maximum diversity gain by selecting an antenna group matrix having the maximum SINR(Signal to Interference Noise Ratio) and executing precoded space-time block coding. A receiving unit in a MIMO system which uses a precoded space-time block coding scheme comprises a channel estimator and a feedback controller. The channel estimator estimates the channel of a signall received from a transmitting unit. The feedback controller comprises an antenna group matrix creation part, a channel state confirmation part, and an antenna group matrix selection part. The antenna group matrix creation part creates group matrixes of antennas installed in the transmitting unit. The channel state confirmation part confirms the channel state of each of the antenna group matrixes. The antenna group matrix selection part selects an antenna group matrix showing the best channel state and feeds information about the selected antenna group matrix back to the transmitting unit.

European Patent Publication EP 2161851 A1 relates to base station coverage optimization using switched multi-element antennas. A femto base station and a method are disclosed. The method comprises the steps of: a) providing a switched multiple antenna array comprising a plurality of antennas, one or more antennas from the plurality of antennas being switchable to form one of a plurality of antenna groups, each antenna group providing a corresponding predetermined fixed beam pattern; b) determining a transmission power for each fixed beam pattern which provides less than a predefined maximum occurrence of unwanted user equipment mobility events over a predetermined period of time; c) determining a quality of service provided to registered user equipment for each fixed beam pattern at that transmission power; and d) selecting that antenna group and transmission power which generates a predetermined fixed beam pattern which maximises quality of service to registered user equipment whilst not exceeding the predefined maximum occurrence of unwanted user equipment mobility events. In this way, the fixed beam pattern and transmission power combination is selected which maximises the coverage provided to registered user equipment whilst ensuring that an acceptable level of unwanted mobility events is not exceed. By ensuring that the number of unwanted mobility events remains low, the number of mobility procedures is minimized which minimises the signaling required to the core network and also reduces the risk of call drop from passing user equipment from occurring.

Japanese Patent Publication JP 2010 199870A relates to providing a technology that allows the use of an appropriate antenna group in wireless communication. A base station includes multiple kinds of antenna groups mutually having different communication performance, a QoS acquisition unit, an antenna-group selection unit, and communication units. The QoS acquisition unit acquires the QoS about a communication terminal being a communication target from external data. The antenna group selection unit selects the antenna group used in communication with the communication terminal being the communication target from the multiple kinds of antenna groups at least on the basis of the QoS. The communication units execute wireless communication with the communication terminal being the communication target by using the antenna group selected by the antenna group selection unit.

International (P.C.T.) Patent Publication WO 2006/006826 A1 discloses an apparatus and method for performing beamforming for transmitting a plurality of bit streams output through Adaptive Modulation and Coding (AMC) via a plurality of transmission antennas in a base station using a multi-antenna scheme. The apparatus and method include classifying the plurality of transmission antennas into a plurality of transmission antenna groups; selecting one of the transmission antenna groups depending on a group selection signal being fed back from a mobile station; and outputting each of the bit streams to its associated transmission antenna among the transmission antennas constituting the selected transmission antenna group.

## Summary

The invention is defined by the independent claims. Embodiments of the invention are laid out in the dependent claims.

In preferred embodiments, at a home base station the transmit power settings of In preferred embodiments, at a home base station the transmit power settings of associated home user terminals are tracked and used to select time slots in which to test alternative selections of antennas. In those embodiments, an antenna selection is tested only if the highest transmit power of a home user terminal exceeds the average for that user terminal. This is to avoid testing when an unacceptably low SINR might well result during testing. SINR is the ratio of signal to interference plus noise. In the preferred embodiments, dynamic testing and use of antenna selections is provided, which allows reduction of transmit power from home user terminals when appropriate, whilst avoiding testing antenna selections when unacceptable performance degradation is likely.

## Brief Description of the Drawings

An embodiment of the present invention will now be described by way of example and with reference to the drawings, in which:

Figure 1 is a diagram illustrating a known cellular telecommunications network (PRIOR ART),
Figure 2 is a diagram illustrating a cellular telecommunications network according to a first embodiment of the present invention, and
Figure 3 is a diagram illustrating the femtocell base station of the network shown in Figure 2, and
Figure 4 is a diagram illustrating the switch and switchable antennas of the femtocell base station shown in Figure 3.

## Detailed Description

As shown in Figure 2, a wireless telecommunications network includes a femtocell base station 4, also known as a home base station in being typically for use indoors in the home. The femtocell base station 4 is closed access in that access is restricted only to registered user terminals 6, for example of family members. The femtocell base station coverage area basically covers the home 8 which is located in an area covered by a macrocell base station 10 which uses the same uplink and downlink frequency bands as the femtocell base station 4.

The femtocell base station will now be described, first more generally then in greater detail in terms of its components.

### Femtocell Base Station

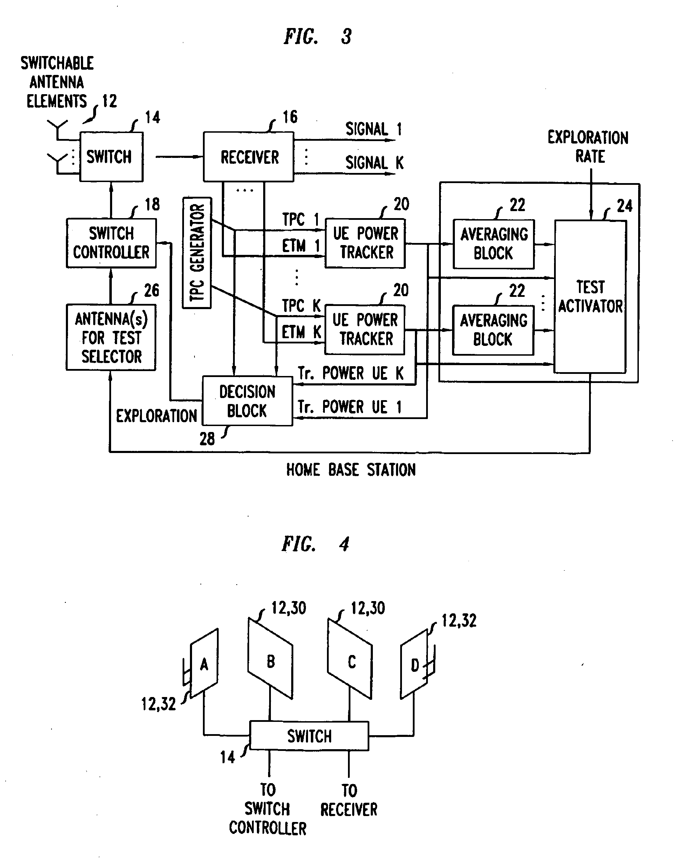

As shown in Figure 3, the femtocell base station 4 comprises multiple switchable antennas 12 connected via a switch 14 to a receiver 16. The switch 16 is connected to a switch controller 18.

The receiver 16 is connected to a series of user terminal power trackers 20, of which there is one for each home user terminal. Each power tracker 20 is connected to a respective averaging block 22 each connected to a test activator 24. The test activator is connected to an antenna(s)-for-test selector 26 which is connected to the switch controller 18.

The power trackers are also connected to a decision block 28 operative to decide whether to exploit the tested antenna selection dependent upon the result(s) from the power tracker(s) 20.

In this example, the femtocell base station 4 is a Wideband Code Division Multiple Access (WCDMA) femtocell base station operating at a 2 GHZ central frequency.

The femtocell base station 4 also includes a transmit power command generator 32.

### Switchable Antennas

The multiple antennas 12 are selectable so that one or two antennas arc selectable for use at a time. In this example, as shown in Figure 4, two of the antennas 12 are patch antennas 30 and two of the antennas 12 are inverted-F antennas 32. This allows for different coverage patterns according to which antenna or combination of two antennas is selected. The possible antenna selections are listed in Table 1, where 1 denotes that the antenna is used and 0 that the antenna is not used.

Table 1

| Antenna Selection | Antenna A | Antenna B | Antenna C | Antenna D |
|---|---|---|---|---|
| a | 1 | 0 | 0 | 0 |
| b | 0 | 1 | 0 | 0 |
| c | 0 | 0 | 1 | 0 |
| d | 0 | 0 | 0 | 1 |
| c | 1 | 1 | 0 | 0 |
| f | 1 | 0 | 1 | 0 |
| g | 1 | 0 | 0 | 1 |
| h | 0 | 1 | 1 | 0 |

(continued)

| Antenna Selection | Antenna A | Antenna B | Antenna C | Antenna D |
|---|---|---|---|---|
| i | 0 | 1 | 0 | 1 |
| j | 0 | 0 | 1 | 1 |

Although in principle more than two antennas can be selected at a time, in practice not more than two antennas are selected for use at a time, in order to keep impedance mismatch acceptable. Selection of the antennas is made by the switch 14 under the control of the switch controller 18.

Receiver

The receiver 16 is a standard receiver that implements basic Wideband Code Division Multiple Access (WCDMA)/ Universal Mobile Telecommunications System (UMTS) operations, including radio frequency (RF) reception, descrambling, despreading, channel estimation, RAKE reception and decoding of control and data signals.

The receiver 16 recovers signals from the home user terminals. The receiver recovers event-triggered measurement reports (ETM), from received signals from the home user terminals. An event-triggered measurement report (ETM) is a control signal sent by a home user terminal to inform the femtocell base station 4 that the actual transmit power transmitted by the user terminal has crossed some predefined level. The receiver provides these reports as inputs to the respective user terminal tracker, of which there is one for each home user terminal.

Transmit power commands (TPC) are single control bits generated in the transmit power command generator and sent to a user terminal on a slot-by slot basis, that instruct the user terminal to adjust its transmit power. A TPC depends on the relation between SINR of the signal received from the user terminal and target SINR. In this example, the target SINR is -5dB. The TPC indicates a transmit power adjustment to be made of either +1dB or -1dB, so as to adjust the SINR, of subsequent signals received from the user terminal, higher or lower, towards the target SINR.

In the femtocell base station 4, the TPCs are also provided by transmit power command generator as inputs to the respective user terminal tracker 20, of which there is one for each home user terminal.

UE power trackers

In the femtocell base station 4, the power tracker 20 of each (home) user terminal uses the ETM reports for initialisation and correction of the tracked transmit power. The transmit power commands generated by the femtocell base station 4 are also used in the tracking.

Specifically, the power tracker monitors transmit power of each home user terminal as follows:

$$p_k(t) = \begin{cases} ETM_k(t), \text{ for } t = t_{ETM} \\ p_k(t-1) + TPC_k(t), \text{ for } t \neq t_{ETM} \end{cases},$$

Where for the $k$ th Home UE for the $t$ th slot, $p_k(t)$ is the transmit power (in dBm), $ETM_k(t)$ is ETM report (in dBm), and $TPC_k(t)$ is the transmit power command which may be +/- 1 dB; and $t_{ETM}$ is the timeslot of reception of an ETM report; and t is timeslot. In other words, for timeslots in respect of which an ETM report is received,
the user terminal power is taken as that reported in the ETM report.
For other timeslots, the UE transmit power is taken as that at the previous timeslot subject to the TPC command for the current timeslot for that user terminal.

Averaging Blocks

The Averaging blocks 22 each implement a conventional low-pass filtering on the output of their respective UE power tracker 20:

$$\tilde{p}_k(t) = \alpha\tilde{p}_k(t-1) + (1-\alpha)p_k(t),$$

where $\tilde{p}_k(t)$ is the average power of the $k$ th Home user terminal, and $0 < a < 1$ is the averaging coefficient. For example, a is 0.998.

The result from each averaging block 22, namely the averaged home user terminal power, is passed the the test activator 24.

Test Activator

The exploration rate, namely the nominal rate of testing a different antenna selection, is or example, once every 50 milliseconds. This is input to the test activator 24.

The test activator 24 receives, for each home user terminal being tracked, both latest transmit power and the averaged transmit power determined for that user terminal. The test activator compares these values and activates a test of an alternative antenna selection, upon determining that the highest of the transmit powers of home user terminals exceeds the average transmit power of that user terminal.

This selective activating of testing of a new antenna selection is advantageous in that it allows testing, and hence possible use of a new antenna selection, only if transmit power reduction, and hence interference suppression, is likely needed. Testing is avoided when transmit power is already low such that the testing may cause unacceptably low SINR of signals received from a user terminal during the testing interval.

The Test Activator is implemented as follows. The command to test is generated in respect of the timeslot at which testing potentially occurs ("exploration slot", $t_{exp}$, defined by the exploration rate), if

$$p_{k_{max}}(t_{exp}) > \beta \overline{p}_{k_{max}}(t_{exp}),$$

where $k_{max}$ is the designation of the Home user terminal corresponding to the maximum transmit power $p_k(t_{exp})$, $k = 1,...,K$, and $\beta > 0$ is a control coefficient. For example $\beta$ is 3 dB, in this example.

Of course if this condition is not met, a command to test is not generated.

This command, if generated, is sent from the test activator to the antenna(s)-for-test selector 26.

In this example which new antenna or combination of two antennas to test is chosen randomly from amongst the possible selections not including the antenna selection that is currently being exploited, in other words, is in use. In some otherwise-similar alternative embodiments, the antenna(s)-for-test selector 26 works through a sequential list of all the available antenna selections, or indicates an antenna selection to test based on historical information such as past use.

Testing an antenna selection

The exploration rate parameter mentioned above defines which time slots and available for possible testing of antenna selection.

The testing of performance of an antenna selection is by whether transmit power from the user terminal that was identified as requiring the highest transmit power can be reduced or needs to be increased to go towards the given target SINR. In this example, the target STNR is -5dB. In this WCDMA based system, the result is a transmit power command (TPC) for that user terminal (denoted $k_{max}$) indicating either a transmit power increment by 1dB or a transmit power decrement by 1dB.

Possible use of tested antenna selection

The result of the testing is passed to the decision block 28 which sends a control signal to the switch controller 18 which controls the switch 14, and hence which antenna or two antenna combination is selected for use.

If the result of the test is $TPC_{k_{max}}(t_{exp}) = -1$ dB, the control signal is a command to continue to use the antenna selection applied at the exploration slot,

If the result of the test is $TPC_{k_{max}}(t_{exp}) = +1$ dB - the control signal is a command to revert to the previous antenna selection, namely the one last exploited.

The switch controller 18 controls the switch 14 accordingly.

General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

**Claims**

1. A method of selecting which subset of antennas (12) to use in a base station (4) for wireless telecommunications, the method comprising:

   using a first subset of antennas for communications with at least one user terminal (6);
   monitoring (20) transmit power of a user terminal by processing over time transmit power increment/decrement commands and by processing reports of transmit power sent by the user terminal;
   calculating (22) average power of the user terminal as a time weighted running average;
   determining (24) whether the highest of the transmit powers of the at least one user terminal is higher than the average transmit power of that user terminal;
   dependent upon the result of that determination testing (26,1$) an alternative subset of the antennas for subsequent use.

2. A method according to claim 1, in which upon the result of the determination being that the highest of the transmit powers of the at least one user terminal is higher than the average transmit power of that user terminal, the alternative subset of the antennas is tested for subsequent use.

3. A method according to claim 1 or claim2, in which first time slots in a repeating sequence of timeslots are provisionally designated as time slots for testing alternative antenna subsets; a provisionally designated time slot for testing being used for testing upon the result of the determination being that the highest transmit power of the at least one user terminal in that time slot is higher than average transmit power for that user terminal.

4. A method according to claim 3, in which the repeating sequence of time slots also comprises second time slots in which the first subset of antennas is used.

5. A method according to any preceding claim, in which the testing is by determining whether the transmit power is to be reduced or increased to approach a target Signal to Interference Noise Ratio (SINR) for that user terminal.

6. A method according to claim 5, in which upon determining that the transmit power is to be reduced to approach the target SINR, a command is sent (28) to make use of the tested subset of antennas.

7. A method according to claim 5, in which upon determining that the transmit power is to be increased to approach the target SINR, a command is sent (28) to make use the subset of antennas last used before the subset of antennas being tested.

8. A method according to any preceding claim in which the base station comprises four antennas (A,B,C,D,30,30,32,32) and each subset of antennas for use or testing comprises only one or two antennas.

9. A method according to any preceding claim, in which the base station monitors transmit power of each user terminal (6), the base station being a femtocell base station, the user terminals being user terminals registered as permitted users of the base station.

10. A base station (4) for wireless telecommunications comprising multiple antennas (12) and means (26,18) to select which subset of the antennas to use, the base station comprising:

   means to use a first subset of the antennas for communications to at least one user terminal;
   means (20) to monitor transmit power of a user terminal by processing over time transmit power increment/decrement commands and by processing reports of transmit power sent by the user terminal;

means (22) to calculate average power of a user terminal as a time weighted running average;

means (24) to determine whether the highest of the transmit power of the at least one user terminal is higher than average transmit power of that user terminal;

means (26,18) to test, dependent upon the result of that determination, an alternative subset of the antennas for subsequent use.

11. A base station according to claim 14, in which the means to monitor comprises a power tracker stage (20) for each of the user terminals connected to a respective power averaging block (22); and the means to determine comprises a test activator (24) connected to a selector (26) of the alternative subset of the antennas to test, the test activator (24) being operative, upon determining that the highest transmit power of the at least one user terminal is higher than the average transmit power of that user terminal, to control the selector (26) to select the alternative subset of the antennas to test.

12. A base station according to claim 10 or 11, which is a femtocell base station, having user terminals registered as permitted users of the base station.

**Patentansprüche**

1. Verfahren zur Auswahl der in einer Basisstation (4) für drahtlose Telekommunikation zu verwendenden Antennenuntergruppe (12), wobei das Verfahren umfasst:

Verwenden einer ersten Antennenuntergruppe für Verbindungen mit mindestens einem Benutzerendgerät (6);

Überwachen (20) der Sendeleistung eines Benutzerendgeräts durch Verarbeiten, über längere Zeit hinweg, von Sendeleistungs-Inkrementierungs/Dekrementierungsbefehlen und durch Verarbeiten von von dem Benutzerendgerät gesendeten Sendeleistungsberichten;

Berechnen (22) der mittleren Leistung des Benutzerendgeräts als einen zeitlich gewichteten laufenden Mittelwert;

Ermitteln (24), ob die höchste der Sendleistungen des mindestens einen Benutzerendgeräts höher als die mittlere Sendeleistung dieses Benutzerendgeräts ist;

abhängend von dem Ergebnis dieser Ermittlung, Testen (26, 18) einer alternativen Antennenuntergruppe für die nachfolgende Verwendung.

2. Verfahren nach Anspruch 1, wobei, wenn die Ermittlung ergibt, dass die höchste der Sendeleistungen des mindestens einen Benutzerendgeräts höher als die mittlere Sendeleistung dieses Benutzerendgeräts ist, die alternative Antennenuntergruppe für die nachfolgende Verwendung getestet wird.

3. Verfahren nach Anspruch 1 oder 2, wobei erste Zeitschlitze in einer sich wiederholenden Folge von Zeitschlitzen vorläufig als Zeitschlitze zum Testen von alternativen Antennengruppen vorgesehen werden, wobei ein vorläufig vorgesehener Zeitschlitz zum Testen für den Test benutzt wird, wenn die Ermittlung ergibt, dass die höchste Sendeleistung des mindestens einen Benutzerendgeräts in diesem Zeitschlitz höher als die mittlere Sendeleistung ist.

4. Verfahren nach Anspruch 3, wobei die sich wiederholende Folge von Zeitschlitzen zweite Zeitschlitze umfasst, in denen die erste Antennenuntergruppe verwendet wird.

5. Verfahren nach einem beliebigen der vorstehenden Ansprüche, wobei das Testen darin besteht, zu ermitteln, ob die Sendeleistung verringert oder erhöht werden muss, um sich einem Ziel-Signal-zu-Interferenz-Rauschverhältnis (SINR) für dieses Benutzerendgerät zu nähern.

6. Verfahren nach Anspruch 5, wobei, wenn ermittelt wird, dass die Sendeleistung verringert werden muss, um sich dem Ziel-SINR zu nähern, ein Befehl gesendet wird (28), um die getestete Antennenuntergruppe zu verwenden.

7. Verfahren nach Anspruch 5, wobei, wenn ermittelt wird, dass die Sendeleistung erhöht werden muss, um sich dem Ziel-SINR zu nähern, ein Befehl gesendet wird (28), um die zuletzt vor dem Testen der Antennenuntergruppe verwendete Antennenuntergruppe zu verwenden.

8. Verfahren nach einem beliebigen der vorstehenden Ansprüche, wobei die Basisstation vier Antennen (A,B,C,D,30,30,32,32) umfasst und jede Antennenuntergruppe zur Verwendung oder zum Testen nur eine oder zwei Antennen umfasst.

9. Verfahren nach einem beliebigen der vorstehenden Ansprüche, wobei die Basisstation die Sendeleistung eines jeden Benutzerendgeräts (6) überwacht, wobei die Basisstation eine Femtozellen-Basisstation ist, wobei die Benutzerendgeräte Benutzerendgeräte sind, die als für die Benutzung der Basisstation zugelassene Benutzer registriert sind.

10. Basisstation (4) für drahtlose Telekommunikation, umfassend mehrere Antennen (12) und Mittel (26, 18) zum Auswählen, welche Antennenuntergruppe verwendet werden soll, wobei die Basisstation umfasst:

Mittel zum Verwenden einer ersten Antennenuntergruppe für Verbindungen mit mindestens einem Benutzerendgerät;
Mittel (20) zum Überwachen der Sendeleistung eines Benutzerendgeräts durch Verarbeiten, über längere Zeit hinweg, der Sendeleistungs-Inkrementierungs/Dekrementierungsbefehle und durch Verarbeiten von von dem Benutzerendgerät gesendeten Sendeleistungsberichten;
Mittel (22) zum Berechnen der mittleren Leistung des Benutzerendgeräts als einen zeitlich gewichteten laufenden Mittelwert;
Mittel (24) zum Ermitteln, ob die höchste der Sendleistungen des mindestens einen Benutzerendgeräts höher als die mittlere Sendeleistung dieses Benutzerendgeräts ist;
Mittel (26, 18) zum Testen, abhängend von dem Ergebnis dieser Ermittlung, einer alternativen Antennenuntergruppe für die nachfolgende Verwendung.

11. Basisstation nach Anspruch 10, wobei das Mittel zum Überwachen eine Leistungsverfolgungsstufe (20) für alle diejenigen Benutzerendgeräte, die an einen jeweiligen Leistungsmittelungsblock (22) angeschlossen sind, umfasst, und wobei das Mittel zum Ermitteln einen an eine Auswahlvorrichtung (26) der zu testenden alternativen Antennenuntergruppe angeschlossenen Testaktivator (24) umfasst, wobei der Testaktivator (24) betreibbar ist, um bei Ermitteln, dass die höchste Sendeleistung des mindestens einen Benutzerendgeräts höher als die mittlere Sendeleistung dieses Benutzerendgeräts ist, die Auswahlvorrichtung (26) anzusteuern, um die zu testende alternative Antennenuntergruppe auszuwählen.

12. Basisstation nach Anspruch 10 oder 11, welche eine Femtozellen-Basisstation ist, an der Benutzerendgeräte, die für die Benutzung der Basisstation zugelassen sind, registriert sind.

**Revendications**

1. Procédé pour sélectionner quel sous-ensemble d'antennes (12) utiliser dans une station de base (4) pour des télécommunications sans fil, le procédé comprenant les étapes suivantes :

utiliser un premier sous-ensemble d'antennes pour des communications avec au moins un terminal utilisateur (6) ;
surveiller (20) la puissance de transmission d'un terminal utilisateur en traitant dans le temps des commandes d'incrémentation/décrémentation de puissance de transmission et en traitant des rapports de puissance de transmission envoyés par le terminal utilisateur ;
calculer (22) une puissance moyenne du terminal utilisateur comme une moyenne mobile pondérée dans le temps ;
déterminer (24) si la plus élevée des puissances de transmission de l'au moins un terminal utilisateur est supérieure à la puissance de transmission moyenne de ce terminal utilisateur ;
selon le résultat de cette détermination, tester (26, 18) un sous-ensemble alternatif des antennes pour une utilisation ultérieure.

2. Procédé selon la revendication 1, dans lequel lorsque le résultat de la détermination est que la plus élevée des puissances de transmission de l'au moins un terminal utilisateur est supérieure à la puissance de transmission moyenne de ce terminal utilisateur, le sous-ensemble alternatif des antennes est testé pour une utilisation ultérieure.

3. Procédé selon la revendication 1 ou la revendication 2, dans lequel les premiers créneaux temporels dans une séquence répétitive de créneaux temporels sont provisoirement dénommés créneaux temporels pour tester des sous-ensembles d'antennes alternatifs ; un créneau temporel provisoirement dénommé pour tester étant utilisé pour tester lorsque le résultat de la détermination est que la puissance de transmission la plus élevée de l'au moins un terminal utilisateur dans ce créneau temporel est supérieure à la puissance de transmission moyenne pour ce terminal utilisateur.

4. Procédé selon la revendication 3, dans lequel la séquence de répétition de créneaux temporels comprend également des deuxièmes créneaux temporels dans lesquels le premier sous-ensemble d'antennes est utilisé.

5. Procédé selon l'une quelconque des revendications précédentes, dans lequel le test consiste à déterminer si la puissance de transmission doit être réduite ou augmentée pour s'approcher d'un rapport signal sur bruit plus interférence (SINR) cible pour ce terminal utilisateur.

6. Procédé selon la revendication 5, dans lequel lorsque l'on détermine que la puissance de transmission doit être réduite pour s'approcher du SINR cible, une commande est envoyée (28) pour utiliser le sous-ensemble d'antennes testé.

7. Procédé selon la revendication 5, dans lequel lorsque l'on détermine que la puissance de transmission doit être réduite pour s'approcher du SINR cible, une commande est envoyée (28) pour utiliser le sous-ensemble d'antennes utilisé en dernier avant que le sous-ensemble d'antennes ne soit testé.

8. Procédé selon l'une quelconque des revendications précédentes dans lequel la station de base comprend quatre antennes (A, B, C, D, 30, 30, 32, 32) et chaque sous-ensemble d'antennes à utiliser ou à tester ne comprend qu'une ou deux antennes.

9. Procédé selon l'une quelconque des revendications précédentes, dans lequel la station de base surveille la puissance de transmission de chaque terminal utilisateur (6), la station de base étant une station de base femtocellulaire, les terminaux utilisateurs étant des terminaux utilisateurs enregistrés en tant qu'utilisateurs autorisés de la station de base.

10. Station de base (4) pour des télécommunications sans fil comprenant des antennes multiples (12) et des moyens (26, 18) pour sélectionner le sous-ensemble des antennes à utiliser, la station de base comprenant :

des moyens pour utiliser un premier sous-ensemble des antennes pour des communications vers au moins un terminal utilisateur ;
des moyens (20) pour surveiller la puissance de transmission d'un terminal utilisateur en traitant dans le temps des commandes d'incrémentation/décrémentation de puissance de transmission et en traitant des rapports de puissance de transmission envoyés par le terminal utilisateur ;
des moyens (22) pour calculer une puissance moyenne d'un terminal utilisateur comme une moyenne mobile pondérée dans le temps ;
des moyens (24) pour déterminer si la plus élevée des puissances de transmission de l'au moins un terminal utilisateur est supérieure à la puissance de transmission moyenne de ce terminal utilisateur ;
des moyens (26, 18) pour tester, selon le résultat de cette détermination, un sous-ensemble alternatif des antennes pour une utilisation ultérieure.

11. Station de base selon la revendication 10, dans laquelle les moyens pour surveiller comprennent un dispositif de suivi de puissance (20) pour chacun des terminaux utilisateurs connectés à une unité de moyennage de puissance respective (22), et les moyens pour déterminer comprennent un activateur de test (24) connecté à un sélecteur (26) du sous-ensemble alternatif des antennes à tester, l'activateur de test (24) permettant, lorsque l'on détermine que la puissance de transmission la plus élevée de l'au moins un terminal utilisateur est supérieure à la puissance de transmission moyenne de ce terminal utilisateur, de commander le sélecteur (26) pour sélectionner le sous-ensemble alternatif des antennes à tester.

12. Station de base selon la revendication 10 ou 11, qui est une station de base femtocellulaire, ayant des terminaux utilisateurs enregistrés en tant qu'utilisateurs autorisés de la station de base.

## FIG. 1
### (PRIOR ART)

HOME

FEMTO CELL
SIGNAL 1

STRONG INTERFERENCE
TO HOME BS

MACRO UE

SIGNAL 2

SHORT
DISTANCE

HOME BS
(CLOSED ACCESS)

LONG DISTANCE

HOME UE1

HOME UE2

MACRO BS

## FIG. 2

HOME
8

MACRO
BASE
STATION

8

4

HOME
BASE STATION
(CLOSED ACCESS)

UE₁

6

UE₂

6

6

UEₖ

**FIG. 3**

SWITCHABLE ANTENNA ELEMENTS 12

14 SWITCH

16 RECEIVER — SIGNAL 1 ⋮ SIGNAL K

18 SWITCH CONTROLLER

TPC GENERATOR

TPC 1 / ETM 1 — 20 UE POWER TRACKER

22 AVERAGING BLOCK

EXPLORATION RATE

24 TEST ACTIVATOR

TPC K / ETM K — 20 UE POWER TRACKER

22 AVERAGING BLOCK

26 ANTENNA(s) FOR TEST SELECTOR

28 DECISION BLOCK

Tr. POWER UE K

Tr. POWER UE 1

EXPLORATION

HOME BASE STATION

**FIG. 4**

12,30   12,30   12,32

A   B   C   D

12,32

SWITCH

14

TO SWITCH CONTROLLER

TO RECEIVER

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070178839 A1
- KR 20080039711 A
- EP 2161851 A1
- JP 2010199870 A
- WO 2006006826 A1

### Non-patent literature cited in the description

- **R. A. MONZINGO ; T. W. MILLER.** Introduction to Adaptive Arrays. New York. Wiley, 1980
- **A. M. KUZMINSKIY ; H. R KARIMI.** Multiple-antenna interference cancellation for WLAN with MAC interference avoidance in open access networks. *EURASIP Journal on Wireless Communications and Networking,* 2007
- **H. CLAUSSEN ; F. PIVIT.** Femtocell coverage optimization using switched multielement antenna. *Proc ICC,* 2009, 1-6
- Avoiding of co-channel interference using switched parasitic array antenna in Fcmtocell networks. *Proc. ICCSA,* 2010, 158-167
- **P. NGAMJANYAPOM ; M. KRAIRIKSH ; M. BIALKOWSKI.** Combating interference in an indoor wireless-communication system using a phased-array antenna with switched-beam elements. *Microwave and Optical Technology Letters,* June 2005, vol. 45 (5), 411-415
- IEEE P802.11 Wireless LANs, TGn Channel Models. *IEEE 802.11-03/940r4,* May 2004